# EUROPÄISCHE PATENTANMELDUNG

(11) **EP 4 631 352 A1**
(43) Veröffentlichungstag der Anmeldung: **15.10.2025**
(21) Anmeldenummer: 24169450.4
(22) Anmeldetag: 10.04.2024
(51) Int. Cl.: A01M 1/02, A01M 1/10, A01M 31/00, A01M 1/04

(54) **INSEKTENFALLE FÜR FLUGINSEKTEN UND KLASSIFIZIERUNGSMODUL**

(71) Anmelder: Universität Kassel, 34125 Kassel (DE)
(72) Erfinder: Siebald, Hubertus, 37213 Witzenhausen (DE); Kirchner, Sascha, 37213 Witzenhausen (DE); Bödeker, Christian, 37213 Witzenhausen (DE)
(74) Vertreter: Schneider, Peter Christian

(57) **Zusammenfassung**

Die Erfindung betrifft eine Insektenfalle (10) für Fluginsekten,
umfassend einen trichterförmigen, von Ziel-Fluginsekten durchfliegbaren Zuführbereich mit einem Eingang größeren Querschnitts und einem Ausgang (123) kleineren Querschnitts,

Die Erfindung zeichnet sich dadurch aus, dass der Zuführbereich ausgangsseitig in eine von den Ziel-Fluginsekten durchfliegbare akustische Resonanzkammer (16) mündet, die einen der Mündung des Zuführbereichs gegenüberliegenden Auslass (162) aufweist und in der ein Mikrofon (181) angeordnet ist, welches mit einer Auswerteeinheit (201) wirkverbunden ist, die eingerichtet ist, bei einem Durchflug eines Ziel-Fluginsekts durch die Resonanzkammer (16) erzeugte und mittels des Mikrofons (181) aufgezeichnete Geräusche zur Klassifizierung des die Geräusche erzeugenden Ziel-Fluginsekts zu analysieren.

Die Erfindung betrifft weiter ein Klassifizierungsmodul (14) einer solchen Insektenfall (10).

## Beschreibung

### Gebiet der Erfindung

Die Erfindung bezieht sich auf eine Insektenfalle für Fluginsekten, umfassend einen trichterförmigen, von Ziel-Fluginsekten durchfliegbaren Zuführbereich mit einem Eingang größeren Querschnitts und einem Ausgang kleineren Querschnitts.

Die Erfindung bezieht sich weiter auf ein Klassifizierungsmodul zur Klassifizierung von mittels einer derartigen Insektenfalle gefangener Fluginsekten.

### Stand der Technik

Gattungsgemäße Insektenfallen für Fluginsekten sind dem Fachmann allgemein bekannt und werden häufig als sogenannte Malaise-Fallen bezeichnet (vgl. *https:*//*de.wikipedia.org*/*wiki*/*Malaise-Falle*). Auch Townes, H. (1972). A light-weight Malaise trap. Entomological news, 83(9), pp. 239-247 beschreibt derartige Insektenfallen. Klassische Malaise-Fallen umfassen ein zeltbodenloses, bodennah aber mit Abstand zwischen dem Boden und dem unteren Zeltplanenrand aufgespanntes Zelt aus wenigstens in seinem Spitzenbereich hellem, lichtdurchlässigem Material. Fluginsekten, die unter diese Zeltfalle geraten, starten nach oben und werden durch die schrägen Zeltwände zur Zeltspitze hin geleitet bzw. durch den dortigen Lichteinfall zur Zeltspitze gelockt. Im Bereich der eigentlichen Zeltspitze befindet sich eine als Ausgang dienende Öffnung, die bei klassischen Malaise-Fallen über ein Flug- oder Krabbelrohr mit einem alkoholgefüllten Behälter verbunden ist. Gefangene Insekten werden in diesem Behälter getötet und konserviert. Der Grundaufbau von Malaise-Fallen hat sich insbesondere wegen ihrer unspezifischen Wirksamkeit gegenüber allen Arten von Fluginsekten als besonders effizient erwiesen. Anders als beispielsweise Köder- oder Pheromonfallen erfolgt der Insektenfang mittels Malaise-Fallen nicht Spezies-spezifisch. Dies erlaubt ein nicht selektives und daraus resultierend objektives Monitoring von Fluginsekten an einem gegebenen Fallenstandort. Als nachteilig muss allerdings die mit dem Fang in klassischen Malaise-Fallen stets verbundene Tötung der gefangenen Insekten betrachtet werden. Wünschenswert wäre eine unspezifische Fangmethode, die eine Klassifizierung der gefangenen, lebenden Insekten sowie deren unbeschadete Freilassung nach der Klassifizierung erlaubt.

Aus der WO 2004/013718 A2 sind Insektenfallen für Fluginsekten bekannt, die ausgewählte Ziel-Spezies durch spezifische Köder in einen Fallenraum locken, dort die vom gefangenen Insekt verursachten Geräusche aufzeichnen und diese Geräusche zur Verifizierung, ob es sich tatsächlich um ein Insekt der gesuchten Ziel-Spezies handelt, zu einem entfernten Auswertungscomputer sendet, der eine akustische Spektralanalyse der aufgezeichneten und übermittelten Audiodaten vornimmt. Dieser Ansatz basiert auf dem dem Fachmann bekannten Umstand, dass die durch den Flügelschlag der Insekten erzeugten Fluggeräusche, für die einzelnen Spezies typisch sind und die Spezies daran unterscheidbar sind.

Auch die EP 3 657 941 B1 offenbart eine Insektenfalle, die Insekten mittels spezifischer Köder, d.h. Spezies-selektiv, in einen Fallenraum lockt. Der Fallenraum ist mit einer unterschiedlich ausgestaltbaren Sensorik zur Erkennung der gefangenen Insekten ausgestattet. Die Druckschrift nennt u.a. die Möglichkeit einer fotografischen, akustischen oder chemischen Erfassung mit anschließender Auswertung der erfassten Messdaten im Rahmen einer Klassifizierung der gefangenen Insekten. Für ein objektives Monitoring ist diese Fallenart jedoch schon wegen der selektiven Anlockung der Insekten ebenfalls nicht geeignet.

### Aufgabenstellung

Es ist die Aufgabe der vorliegenden Erfindung, eine für ein objektives Monitoring geeignete Insektenfalle für Fluginsekten, die das Monitoring unbeschadet überstehen sollen, zur Verfügung zu stellen.

### Darlegung der Erfindung

Diese Aufgabe wird in Verbindung mit den Merkmalen des Oberbegriffs von Anspruch 1 dadurch gelöst, dass der Zuführbereich ausgangsseitig in eine von den Ziel-Fluginsekten durchfliegbare akustische Resonanzkammer mündet, die einen der Mündung des Zuführbereichs gegenüberliegenden Auslass aufweist und in der ein Mikrofon angeordnet ist, welches mit einer Auswerteeinheit wirkverbunden ist, die eingerichtet ist, bei einem Durchflug eines Ziel-Fluginsekts durch die Resonanzkammer erzeugte und mittels des Mikrofons aufgezeichnete Geräusche zur Klassifizierung des die Geräusche erzeugenden Ziel-Fluginsekts zu analysieren.

Bevorzugte Ausführungsformen sind Gegenstand der abhängigen Ansprüche.

Die Erfindung nutzt die unspezifische Fangcharakteristik klassischer Malaise-Fallen und kombiniert diese mit einer die gefangenen Insekten nicht beeinträchtigenden akustischen Analyse der von ihnen selbst abgegebenen Geräusche zum Zwecke ihrer Klassifikation, wobei die Erfindung von einer passiven, resonanzbasierten Verstärkung der Geräusche Gebrauch macht, was den Einsatz einer besonders kostengünstigen und robusten Sensorik ermöglicht.

Die von der Erfindung genutzte Klassifizierungsmethode baut auf der dem Fachmann grundsätzlich bekannten, oben bereits erwähnten Erkenntnis auf, dass sich das Flügelschlagverhalten von Insekten unterschiedlicher Spezies bzw. funktioneller Gruppen in typischer Weise unterscheidet, sodass eine präzise Analyse der Geräusche, die durch eben jenen Flügelschlag verursacht werden, Aufschluss über die Spezies des geräuscherzeugenden Insekts geben kann. Vorbekannte Analysemethoden basieren in der Regel auf einer exakten Spektralanalyse und einem Vergleich der analysierten Daten mit hinterlegten Referenzdaten. Dies ist auch im Fall der vorliegenden Erfindung möglich, wenngleich weiter unten eine andere, derzeit als bevorzugt angesehene Auswertungsmethode dargestellt wird. In jedem Fall ist im Rahmen der Erfindung bevorzugt vorgesehen, dass die Auswertung der aufgenommenen Geräusche in Echtzeit vor Ort erfolgt. Dies erlaubt es, wie weiter unten noch genauer ausgeführt, die gefangenen Insekten in Abhängigkeit vom Auswertungsergebnis ohne größeren Zeitverzug unterschiedlich zu behandeln.

Besonders bevorzugt erfolgt die gesamte Messung, Auswertung und Klassifizierung in einem handlichen Modul, welches alle hierfür wesentlichen Komponenten umfasst und sich ggf. über geeignete Adapter an den Fangzelten klassischer Malaise-Fallen ankoppeln lässt. Ein eigenständig vermarktbarer Bestandteil einer bevorzugten Ausführungsform der Erfindung ist daher Gegenstand von Anspruch 15, d.h. ein Klassifizierungsmodul zur Klassifizierung von Fluginsekten, umfassend
- eine von Ziel-Fluginsekten durchfliegbare akustische Resonanzkammer mit einem Einlass und einem dem Einlass gegenüberliegenden Auslass,
- ein in der Resonanzkammer angeordnetes Mikrofon,
- eine mit dem Mikrofon wirkverbundene Auswerteeinheit, die eingerichtet ist, bei einem Durchflug eines Ziel-Fluginsekts durch die Resonanzkammer erzeugte und mittels des Mikrofons aufgezeichnete Geräusche zur Klassifizierung des die Geräusche erzeugenden Ziel-Fluginsekts zu analysieren,
wobei der Einlass der Resonanzkammer gestaltet und dimensioniert ist, mit einem Ausgang einer korrespondierenden Insektenfalle für Fluginsekten, umfassend einen trichterförmigen, von Ziel-Fluginsekten durchfliegbaren Zuführbereich mit einem Eingang größeren Querschnitts und besagtem Ausgang kleineren Querschnitts, gekoppelt zu werden. Vereinfacht ausgedrückt handelt es sich hierbei um eine modulare, akustische Klassifizierungsanordnung, die zur Kopplung mit dem Fangbereich einer klassischen Malaise-Falle ausgelegt ist und deren üblichen Tötungs- und Konservierungsbereich ersetzen soll. Sind im Einzelfall andere Fangmethoden als mittels des bekannten Malaise-Prinzips gewünscht, so können die erfindungsgemäßen Klassifizierungsmodule ohne weiteres auch mit anderen Fangapparaten gekoppelt werden, sofern diese einen von den Ziel-Fluginsekten durchfliegbaren Ausgang aufweisen.

Das wesentliche Funktionselement der erfindungsgemäßen Insektenfalle bzw. des erfindungsgemäßen Klassifizierungsmoduls ist die akustische Erfassung der Fluggeräusche der gefangenen Insekten. Zur mechanischen und damit indirekt akustischen Optimierung der Erfindung ist bevorzugt vorgesehen, dass die Resonanzkammer eine Wandung aufweist, deren Innenseite und/oder deren Außenseite schallhart ausgebildet ist, d.h. auftreffenden Schall sehr gut reflektiert. Die Reflexion an der Innenseite führt bei geeigneter Dimensionierung des Resonanzkammer-Innenraums zum Ausbilden von verstärkenden Resonanzen die den Einsatz wenig empfindlicher Mikrofone erlauben. Die Dimensionierung des Resonanzkammer-Innenraums ist dabei vorzugsweise an die erwarteten Frequenzen der von den Ziel-Fluginsekten erzeugten Geräusche angepasst. Diese liegen typischerweise zwischen 100 Hz und 1.000 Hz. Die schallharte Ausbildung der Außenseite hat den Vorteil, dass von außen auf die Resonanzkammer auftreffende Schallwellen ebenfalls - allerdings nach außen - reflektiert werden und daher die Geräusche im Innenraum nicht oder wenig beeinträchtigen oder überlagern.

Besonders bevorzugt ist die Wandung mehrschichtig ausgebildet, wobei besagte Innenseite und besagte Außenseite jeweils schallhart ausgebildet und unterschiedlichen, akustisch voneinander entkoppelten Wandungsschichten zugeordnet sind. Auf diese Weise wird eine Wechselwirkung zwischen der resonanzerzeugenden Reflexion nach innen und der abschirmenden Reflexion nach außen vermieden.

Dies wird bei einer besonders bevorzugten Ausführungsform dadurch realisiert, dass eine innere Wandungsschicht
- durch eine elastomere Aufhängung der inneren Wandungsschicht an der äußeren Wandungsschicht,
- eine zwischen den Wandungsschichten angeordnete Dämmstoffschicht und/oder einen zwischen ihnen angeordneten, vakuumierten oder mit einem Edelgas gefüllten Zwischenraum
akustisch entkoppelt sind. Auf diese oder ähnliche Weise lässt sich die akustische Detektion im Inneren der Resonanzkammer sehr gut gegen äußere Störungen abschirmen.

Zur Verbesserung oder zum Feintuning des Resonanzverhaltens der Resonanzkammer kann in deren Innerem eine schwingfähige Membran gespannt sein, die dazu beitragen kann, zusätzliche Resonanzmoden anzuregen und beispielsweise auch in Obertönen der Grundfrequenzen enthaltene Energie für die akustische Detektion mittels des Mikrofons nutzbar zu machen. Eine solche Membran besteht vorzugsweise aus einem witterungsbeständigen Material, beispielsweise einer Carbonfolie oder einem Carbongeflecht.

All solche Maßnahmen dienen dazu, den für eine zuverlässige Detektion erforderlichen Grenz-Geräuschpegel abzusenken, um mit möglichst einfachen, kostengünstigen und robusten Mikrofonen arbeiten zu können. Insbesondere halten die Erfinder derzeit die Verwendung von MEMS-Mikrofonen für besonders vorteilhaft. MEMS steht für Micro Electric Mechanical System und ist ein fachüblicher Ausdruck für miniaturisierte Elektret-Kondensatormikrofone, die im Fachhandel allgemein erhältlich sind.

Unabhängig von der speziellen Bauart der Mikrofone sind diese bevorzugt an Positionen der Resonanzkammer angeordnet, an denen sich im Fall, dass in der Resonanzkammer Geräusche erzeugt werden, die für die Ziel-Fluginsekten typisch sind, akustische Schwingungsbäuche ausbilden. Es sind dies die Positionen maximaler Geräuschverstärkung durch Resonanz. Im Resonanzfall entsteht nämlich eine stehende Welle mit ortsfesten Positionen maximaler Druckamplitude (Schwingungsbäuche) bzw. minimaler Druckamplitude (Schwingungsknoten).

Wie erläutert, steht die akustische Detektion und damit die akustische Sensorik im Fokus des erfindungsgemäßen Funktionsprinzips. Zusätzlich ist es jedoch möglich und bei einer bevorzugten Ausführungsform der Erfindung auch vorgesehen, dass in der Resonatorkammer zusätzlich ein mit der Auswerteeinheit verbundener Luftfeuchte- und/oder Luftdichtesensor angeordnet ist und die Auswerteeinheit eingerichtet ist, dessen Messwerte im Rahmen der Klassifizierung zu berücksichtigen. Dem liegt die Erkenntnis der Erfinder zugrunde, dass das Flugverhalten und damit die von Fluginsekten erzeugten Geräusche, die insbesondere durch das Schlagen der Flügel bewirkt werden, von der Viskosität der umgebenden Luft mit beeinflusst werden. Die Kenntnis der Luftfeuchte und/oder der Luftdichte können also zu einer präziseren Klassifizierung der gefangenen Fluginsekten und insbesondere zur Vermeidung von Verwechslungen zwischen akustisch ähnlichen Insektenspezies beitragen.

Die Auswerteeinheit ist vorzugsweise als Elemente eines mit der Resonanzkammer mechanisch verbundenen Computers, insbesondere eines miniaturisierten Ein-Platinen-Computers realisiert. Speziell bietet sich hierfür ein Ein-Platinen-Computer vom Typ "Raspberry Pi" an. Diese sind kostengünstig, robust, einfach zu programmieren und bieten eine überschaubare, für die vorliegende Anwendung aber durchaus ausreichende Anzahl von Ein- und Ausgabe-Schnittstellen. Die mechanische Kopplung eines solchen Ein-Platinen-Computers mit der Resonanzkammer ermöglicht den Aufbau eines autarken Klassifizierungsmoduls, dass bei geeigneter Energieversorgung mittels Batterien oder, bevorzugt, mittels solargespeister Akkus für die Feldforschung abseits jeglicher Infrastruktur besonders geeignet ist.

Bei der Auswerteeinheit handelt es sich bevorzugt um eine solche, die eine Software-implementierte, mit einer Vielzahlt von von Ziel-Fluginsekten erzeugten Geräuschen als Trainingsdaten trainierte künstliche Intelligenz umfasst. Dieser Ansatz erspart eine gezielte Spektralanalyse einschließlich der Suche nach bekannten Merkmalen im Spektrum bzw. dem expliziten Vergleich aufgezeichneter Spektren mit hinterlegten Referenzspektren. Vielmehr erlaubt es der KI-Ansatz, die aufgenommenen Geräusche unmittelbar auszuwerten und dabei ggf. sogar ohne explizite Kenntnis der Entscheidungskriterien zu sehr guten Klassifizierungsergebnissen zu gelangen. Zudem können erzielte Klassifizierungsergebnisse zum fortgesetzten Training der KI genutzt und die Klassifizierungsqualität dadurch stetig verbessert werden.

Neben der Auswerteeinheit kann bei einer Weiterbildung der Erfindung vorgesehen sein, dass auch eine Steuereinheit umfasst ist, mittels welcher zusätzliche, steuerbare Komponenten ansteuerbar sind. Auch besagte Steuereinheit kann als Element des vorgenannten Computers realisiert sein.

Eine dieser von der Steuereinheit steuerbaren, Zusatzkomponenten kann eine Datenfernübertragungs-Schnittstelle sein, mittels welcher die Klassifizierungsergebnisse an einen entfernt angeordneten, zentralen Computer übermittelt werden können, der die Daten von einer Vielzahl parallel aufgestellter, erfindungsgemäßer Fallen sammelt und ggf. weiter verwertet. Bevorzugt erfolgt die Datenauswertung jedoch in Echtzeit vor Ort.

Alternativ oder zusätzlich kann vorgesehen sein, dass im Zuführbereich, in der Resonanzkammer und/oder am Auslass von der Steuereinheit steuerbare optische Lockmittel, insbesondere LEDs, mittels welcher ein von den Ziel-Fluginsekten wahrnehmbares Licht emittierbar ist, angeordnet sind. Derartige Lockmittel am Eingang des Zuführbereichs locken Insekten zur Falle, was unter Umständen einem völlig Speziesunspezifischen Monitoring entgegensteht. Optische Lockmittel am Ausgang des Zuführbereichs, d.h. am Übergang zur Resonanzkammer, erscheinen hier weniger kritisch und unterstützen lediglich die Überführung der bereits gefangenen Insekten in die Resonanzkammer, wodurch der gesamte Fang- und Klassifizierungsprozess schneller und daher weniger belastend ausfällt. Gleiches gilt für Lockmittel in der Resonanzkammer oder an deren Auslass.

Alternativ oder zusätzlich kann vorgesehen sein, dass eine von der Steuereinheit steuerbare Druckdifferenz-Erzeugungseinrichtung umfasst ist, mittels welcher ein in Richtung des Auslasses gerichteter Luftstrom erzeugbar ist. Auf diese Weise werden in den Bereich der Falle geratende Fluginsekten aktiv mechanisch in bzw. durch die Falle und insbesondere durch die Resonanzkammer gezogen. Selbstverständlich darf der Luftstrom nicht so stark eingestellt werden, dass die gefangenen Insekten mechanischen Schaden erleiden. Bei sinnvoll dimensioniertem Luftstrom wird jedoch der Fang- und Klassifizierungsprozess beschleunigt und die Belastung der Insekten verringert.

Das Erzeugen eines Luftstroms kann mit dem Erzeugen zusätzlicher Störgeräusche verbunden sein, sei es durch den Luftstrom selbst oder durch den Motor eines entsprechenden Gebläses. Daher kann bei einer Ausführungsform vorgesehen sein, dass die Steuereinrichtung den Luftstrom nur zur Zuführung der Insekten zu der akustischen Messung und zur Leerung der Resonanzkammer danach nutzt und während der akustischen Messung abschaltet. Andererseits können die durch die Druckdifferenz-Erzeugungseinrichtung verursachten Geräusche auch positiv genutzt werden. So kann die Steuereinheit eingerichtet sein, zu vorgegebenen Zeiten eine automatische Kalibrierung des Mikrofons vorzunehmen und hierzu zwecks Erzeugung eines akustischen Standardsignals die Druckdifferenz-Erzeugungseinheit zu aktivieren. Mit anderen Worten wird also der Umstand genutzt, dass die durch den Luftstrom und/oder das Gebläse erzeugten, für die eigentliche Messung eher störenden Geräusche im Detail bekannt und daher als Standard für die Kalibrierung nutzbar sind. Ihre Messung mittels des Mikrofons und ein Vergleich mit hinterlegten Referenzaufnahmen gibt also einen klaren Hinweis auf die Funktionstüchtigkeit des Mikrofons.

Bislang war stets unspezifisch vom Auslass der Resonanzkammer die Rede. Wie eingangs erläutert, ist es das primäre Ziel einer erfindungsgemäßen Insektenfalle, die gefangenen Insekten möglichst schadlos untersuchen und klassifizieren zu können. In besonderen Fällen kann jedoch die selektive Tötung von bestimmten Schadinsekten gewünscht sein. Bei einer Weiterbildung der Erfindung kann daher vorgesehen sein, dass der Auslass in einen Selektionsbereich mit einer von der Steuereinheit steuerbaren Wegleitvorrichtung, mittels welcher den Auslass passierende Ziel-Fluginsekten in unterschiedliche Zielbereiche leitbar sind. Dabei kann die Steuereinheit eingerichtet sein, die Wehleitvorrichtung in Abhängigkeit von Klassifizierungsergebnissen der Auswerteeinheit anzusteuern. Beispielweise kann der Selektionsbereich über Klappen, Schieber oder temporär erzeugte Luftdruckunterschiede Insekten, die nach ihrer Klassifizierung die Resonanzkammer verlassen, auf unterschiedliche Wege bzw. zu unterschiedlichen Zielbereichen leiten. Einer dieser Wege kann beispielsweise in die Freiheit führen. Ein anderer dieser Wege mag zu einer Tötungsstation, beispielsweise einem mit Alkohol oder einem Insektizid gefüllten Behälter führen. Denkbar ist auch das Leiten der Insekten in einen Aufbewahrungsraum, in dem sie lebend gefangen- und für weitere Untersuchungen vorgehalten werden. Diese Selektion erfolgt bevorzugt in Abhängigkeit von dem Ergebnis der vorangegangenen Klassifizierung. Dieses wird von der Auswerteeinheit an die Steuereinheit geliefert, die dann entsprechend vorgegebenen, im Ein-Platinen-Computer hinterlegten Regeln die Wegleitvorrichtung ansteuert.

Weitere Einzelheiten und Vorteile der Erfindung ergeben sich aus der nachfolgenden speziellen Beschreibung und den Zeichnungen.

### Kurzbeschreibung der Zeichnungen

Es zeigt:

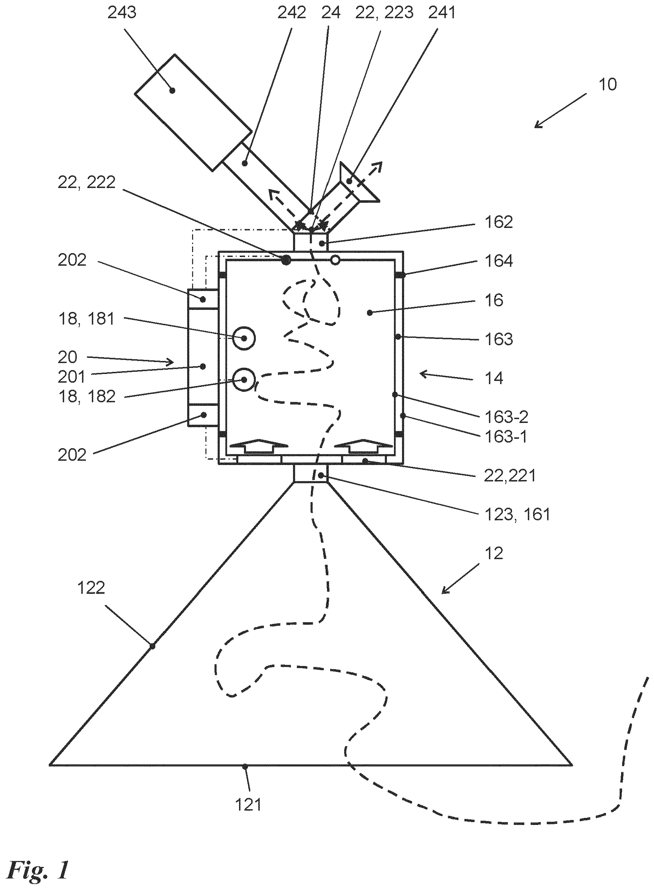

- Figur 1:: eine schematische Darstellung einer erfindungsgemäßen Insektenfalle.

### Beschreibung bevorzugter Ausführungsformen

Figur 1 zeigt in stark schematisierter Darstellung eine bevorzugte Ausführungsform einer erfindungsgemäßen Insektenfalle 10. Die Insektenfalle 10 besteht im Wesentlichen aus einem Fangzelt 12 und einem Klassifizierungsmodul 14.

Das Fangzelt 12 entspricht im Wesentlichen dem von klassischen Malaise-Fallen bekannten Fangzelt mit offenem Boden 121 und flexiblen Zeltwänden 122, die sich trichterförmig zwischen dem offenen Boden 121 und einem Ausgang 123 erstrecken. Derartige Zeltfallen 12 sind geeignet, Fluginsekten, die unter das Fangzelt 12 geraten, zu dessen Ausgang 123 zu leiten, ohne dabei eine Spezies-spezifische Selektion vorzunehmen.

Das Klassifizierungsmodul 14 weist als einen wesentlichen Bestandteil eine Resonanzkammer 16 mit einem Einlass 161 und einem Auslass 162 auf. Bei der dargestellten Ausführungsform ist die Wandung 163 der Resonanzkammer 16 doppelschichtig ausgebildet, nämlich mit einer schallharten äußeren Wandungsschicht 163-1 und einer ebenfalls schallharten inneren Wandungsschicht 163-2, die über Elastomer-Stege 164 mechanisch miteinander verbunden und dabei akustisch weitgehend entkoppelt sind.

Im Inneren der Resonanzkammer 16 ist eine Sensorik 18 mit ggf. mehreren, unterschiedlichen Sensoren vorgesehen. In jedem Fall handelt es sich dabei um ein Mikrofon 181, das bevorzugt als MEMS-Mikrofon ausgebildet ist. Bei der dargestellten Ausführungsform ist zusätzlich ein Luftfeuchte- und Luftdichte-Sensor 182 vorgesehen.

Diese Sensorik 18 ist, wie durch die strichpunktierten Steuerleitungen angedeutet, mit einer Auswerteeinheit 201 eines Ein-Platinen-Computers 20 verbunden. In dieser Auswerteeinheit 201 ist in Software eine künstliche Intelligenz implementiert, die darauf trainiert ist, von dem Mikrofon 181 aufgenommene Geräusche zu analysieren und einer bestimmten Fluginsekten-Spezies zuzuordnen. Auf diese Weise kann ein in die Resonanzkammer 16 geratenes und dort herumfliegendes Fluginsekt anhand der von ihm verursachten Geräusche zuverlässig klassifiziert werden.

Bei der dargestellten Ausführungsform enthält die Resonanzkammer weitere Zusatzkomponenten 22, nämlich insbesondere ein Gebläse 221 und eine blaue LED-Einheit 222. Beide dienen dazu, ein in die Resonanzkammer 16 geratenes Fluginsekt möglichst zügig und unversehrt zu deren Auslass 162 zu leiten. Mittels des Gebläses 221 wird ein entsprechend gerichteter Luftstrom erzeugt, der das Fluginsekt mechanisch leitet. Mittels der LED-Einheit 222 wird ein optischer Lockreiz erzeugt, der das Fluginsekt zum Auslass 162 lockt. Die Zusatzkomponenten 22 sind, wie durch die strichpunktierten Steuerleitungen angezeigt, mit einer (hier zweigeteilt dargestellten) Steuereinheit 202 des Ein-Platinen-Computers 20 verbunden. In dieser Steuereinheit 202 sind entsprechende Steuerregeln hinterlegt. Die Steuereinheit 202 kann bevorzugt mit der Auswerteeinheit 201 in datenaustauschender Verbindung stehen, um zusätzliche Funktionen zu erfüllen.

So kann sich an den Auslass 162 der Resonanzkammer 16 ein Selektionsbereich 24 anschließen. Dieser umfasst bei der gezeigten Ausführungsform zwei Ausgänge, deren erster Ausgang 241 in die Umgebung mündet, wohingegen der zweite Ausgang 242 in eine Tötungs- und Konservierungsstation 243 mündet, in welcher dort hingeleitete Fluginsekten beispielsweise durch konzentrierten Alkohol getötet und konserviert werden.

Um die den Auslass 162 passierenden Fluginsekten gezielt zum ersten Ausgang 241 oder zum zweiten Ausgang 242 leiten zu können, ist als weitere Zusatzkomponente 22 eine von der Steuereinheit 202 ansteuerbare Klappe 223 vorgesehen, mittels welcher jeweils einer der Ausgänge 241, 242 geöffnet bzw. geschlossen werden kann. Bei einer solchen Ausführungsform ist die oben bereits erwähnte datenaustauschende Kopplung zwischen der Auswerteeinheit 201 und der Steuereinheit 202 von besonderer Bedeutung, da hierdurch die Wahl des Ausgangs 241, 242 vom Ergebnis der Klassifizierung abhängig gemacht werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere können die Dimensionen des Fangzeltes 12 und der Resonanzkammer 16 an die Dimensionen bzw. erwarteten Frequenzen der interessierenden Ziel-Fluginsekten angepasst werden. Auch hinsichtlich der Resonanz-Optimierung und der akustischen Kapselung der Resonanzkammer 16 kann der Fachmann auf eine Vielzahl bereits bekannter und noch unbekannter Techniken zurückgreifen.

### Bezugszeichenliste

- 10: Insektenfalle
- 12: Fallenzelt
- 121: offener Boden
- 122: Zeltwand
- 123: Ausgang
- 14: Klassifizierungsmodul
- 16: Resonanzkammer
- 161: Einlass
- 162: Auslass
- 163: Wandung
- 163-1: äußere Wandungsschicht
- 163-2: innere Wandungsschicht
- 164: elastomerer Steg
- 18: Sensorik
- 181: Mikrofon
- 182: Luftfeuchte- und Luftdichtesensor
- 20: Ein-Platinen-Computer
- 201: Auswerteeinheit
- 202: Steuereinheit
- 22: Zusatzkomponente
- 221: Gebläse
- 222: LED-Einheit
- 223: Klappe
- 24: Selektionsbereich
- 241: erster Ausgang
- 242: zweiter Ausgang
- 243: Tötungs- und Konservierungsstation

## Patentansprüche

1. Insektenfalle (10) für Fluginsekten,
umfassend einen trichterförmigen, von Ziel-Fluginsekten durchfliegbaren Zuführbereich mit einem Eingang größeren Querschnitts und einem Ausgang (123) kleineren Querschnitts,
**dadurch gekennzeichnet,**
**dass** der Zuführbereich ausgangsseitig in eine von den Ziel-Fluginsekten durchfliegbare akustische Resonanzkammer (16) mündet, die einen der Mündung des Zuführbereichs gegenüberliegenden Auslass (162) aufweist und in der ein Mikrofon (181) angeordnet ist, welches mit einer Auswerteeinheit (201) wirkverbunden ist, die eingerichtet ist, bei einem Durchflug eines Ziel-Fluginsekts durch die Resonanzkammer (16) erzeugte und mittels des Mikrofons (181) aufgezeichnete Geräusche zur Klassifizierung des die Geräusche erzeugenden Ziel-Fluginsekts zu analysieren.

2. Insektenfalle (10) nach Anspruch 1,
**dadurch gekennzeichnet,**
**dass** in der Resonanzkammer (16) weiter ein mit der Auswerteeinheit (201) wirkverbundener Luftfeuchte- und/oder Luftdichte-Sensor (182) angeordnet ist und die Auswerteeinheit (201) eingerichtet ist, dessen Messwerte im Rahmen der Klassifizierung zu berücksichtigen.

3. Insektenfalle (10) nach einem der vorangehenden Ansprüche,
**dadurch gekennzeichnet,**
**dass** weiter eine Steuereinheit (202) umfasst ist, mittels welcher steuerbare Zusatzkomponenten (22) ansteuerbar sind.

4. Insektenfalle (10) nach einem der vorangehenden Ansprüche,
**dadurch gekennzeichnet,**
**dass** die Auswerteeinheit (201) und - sofern vorhanden - die Steuereinheit (202) als Elemente eines bevorzugt mit der Resonanzkammer (16) mechanisch verbundenen Ein-Platinen-Computers (20) realisiert sind.

5. Insektenfalle (10) nach einem der vorangehenden Ansprüche,
**dadurch gekennzeichnet,**
**dass** die Auswerteeinheit (201) eine Software-implementierte, mit einer Vielzahl von von Ziel-Fluginsekten erzeugten Geräuschen als Trainingsdaten trainierte künstliche Intelligenz umfasst.

6. Insektenfalle (10) nach einem der vorangehenden Ansprüche,
**dadurch gekennzeichnet,**
**dass** die Resonanzkammer (16) eine Wandung (163) aufweist, deren Innenseite und/oder deren Außenseite schallhart ausgebildet ist.

7. Insektenfalle (10) nach Anspruch 6,
**dadurch gekennzeichnet,**
**dass** die Wandung (163) mehrschichtig ausgebildet ist, wobei besagte Innenseite und besagte Außenseite jeweils schallhart ausgebildet und unterschiedlichen, akustisch voneinander entkoppelten Wandungsschichten (163-1, 163-2) zugeordnet sind.

8. Insektenfalle (10) nach Anspruch 7,
**dadurch gekennzeichnet,**
**dass** die Wandungsschichten (163-1, 163-2) eine innere Wandungsschicht (163-2) und eine äußere Wandungsschicht (163-1) umfassen und die Wandungsschichten (163-1, 163-2)
- durch eine elastomere Aufhängung der inneren Wandungsschicht (163-2) an der äußeren Wandungsschicht (163-1),
- eine zwischen ihnen angeordnete Dämmstoffschicht und/oder
- einen zwischen ihnen angeordneten, vakuumierten oder mit einem Edelgas gefüllten Zwischenraum
akustisch entkoppelt sind.

9. Insektenfalle (10) nach einem der vorangehenden Ansprüche,
**dadurch gekennzeichnet,**
**dass** im Inneren der Resonanzkammer (16) eine schwingfähige Membran gespannt ist, insbesondere aus einem witterungsbeständigen Material, insbesondere aus einer Carbonfolie oder einem Carbongeflecht.

10. Insektenfalle (10) nach einem der vorangehenden Ansprüche,
**dadurch gekennzeichnet,**
**dass** das Mikrofon (181), das insbesondere als MEMS-Mikrofon ausgebildet ist, in der Resonanzkammer (16) an einer Position angeordnet ist, an der sich im Fall, dass in der Resonanzkammer (16) Geräusche erzeugt werden, die für die Ziel-Fluginsekten typisch sind, akustische Schwingungsbäuche ausbilden.

11. Insektenfalle (10) nach Anspruch 3 oder einem der Ansprüche 4 bis 10, soweit rückbezogen auf Anspruch 3,
**dadurch gekennzeichnet,**
**dass** im Zuführbereich, in der Resonanzkammer (16) und/oder am Auslass (162) von der Steuereinheit (202) steuerbare optische Lockmittel, insbesondere LEDs (222), mittels welcher ein von den Ziel-Fluginsekten wahrnehmbares Licht emittierbar ist, angeordnet sind.

12. Insektenfalle (10) nach Anspruch 3 oder einem der Ansprüche 4 bis 11, soweit rückbezogen auf Anspruch 3,
**dadurch gekennzeichnet,**
**dass** weiter eine von der Steuereinheit (201) steuerbare Druckdifferenz-Erzeugungseinrichtung umfasst ist, mittels welcher ein in Richtung des Auslasses (162) gerichteter Luftstrom erzeugbar ist.

13. Insektenfalle (10) nach Anspruch 12,
**dadurch gekennzeichnet,**
**dass** die Steuereinheit (201) eingerichtet ist, zu vorgegebenen Zeiten eine automatische Kalibrierung des Mikrofons (181) vorzunehmen und hierzu zwecks Erzeugung eines akustischen Standardsignals die Druckdifferenz-Erzeugungseinrichtung zu aktivieren.

14. Insektenfalle (10) nach Anspruch 3 oder einem der Ansprüche 4 bis 13, soweit rückbezogen auf Anspruch 3,
**dadurch gekennzeichnet,**
**dass** der Auslass (162) in einen Selektionsbereich (24) mit einer von der Steuereinheit (202) steuerbaren Wegleitvorrichtung mündet, mittels welcher den Auslass (162) passierende Ziel-Fluginsekten in unterschiedliche Zielbereiche leitbar sind,
wobei die Steuereinheit (202) insbesondere eingerichtet ist, die Wegleitvorrichtung in Abhängigkeit von Klassifizierungsergebnissen der Auswerteeinheit (201) anzusteuern.

15. Klassifizierungsmodul (14) zur Klassifizierung von Fluginsekten, umfassend
- eine von Ziel-Fluginsekten durchfliegbare akustische Resonanzkammer (16) mit einem Einlass (161) und einem dem Einlass (161) gegenüberliegenden Auslass (162),
- ein in der Resonanzkammer (16) angeordnetes Mikrofon (181),
- eine mit dem Mikrofon (181) wirkverbundene Auswerteeinheit (201), die eingerichtet ist, bei einem Durchflug eines Ziel-Fluginsekts durch die Resonanzkammer (16) erzeugte und mittels des Mikrofons (181) aufgezeichnete Geräusche zur Klassifizierung des die Geräusche erzeugenden Ziel-Fluginsekts zu analysieren,
wobei der Einlass (161) der Resonanzkammer (16) gestaltet und dimensioniert ist, mit einem Ausgang (123) einer korrespondierenden Insektenfalle (10) für Fluginsekten, umfassend einen trichterförmigen, von Ziel-Fluginsekten durchfliegbaren Zuführbereich mit einem Eingang größeren Querschnitts und besagtem Ausgang (123) kleineren Querschnitts, gekoppelt zu werden.
